# EUROPÄISCHE PATENTSCHRIFT

(11) **EP 2 163 797 B1**
(45) Veröffentlichungstag und Bekanntmachung des Hinweises auf die Patenterteilung: **16.07.2014**
(21) Anmeldenummer: 09168140.3
(22) Anmeldetag: 19.08.2009
(51) Int. Cl.: F16K 3/24, F16K 27/04

(54) **Ventileinrichtung**
Valve device
Dispositif de vanne

(30) Priorität: 16.09.2008 DE 102008047311
(43) Veröffentlichungstag der Anmeldung: 17.03.2010
(73) Patentinhaber: Mahle International GmbH, 70376 Stuttgart (DE)
(72) Erfinder: Kiemlen, Ralf, 72760 Reutlingen (DE); Schuetzle, Roland, 74223 Flein (DE)
(74) Vertreter: BRP Renaud & Partner

(56) Entgegenhaltungen:
- EP-A2- 0 295 466
- DE-A1- 10 340 932
- GB-A- 572 807
- JP-U- 49 005 726
- US-A- 4 522 231

## Beschreibung

Die vorliegende Erfindung betrifft einen Ölkühler mit einer Ventileinrichtung mit einem Zylinder und einem darin translatorisch bewegbaren Schieber gemäß dem Oberbegriff des Anspruchs 1.

Aus der DE 199 43 294 A1 ist eine Ventileinrichtung bekannt, welche dafür sorgen soll, dass die Temperatur eines in einem Kreislauf strömenden Öls nach einem Motorstart möglichst frühzeitig auf ein im Motorbetrieb günstiges Niveau angehoben werden kann. Hierzu führt die Ventileinrichtung das zu erwärmende Öl bedarfsweise einem Wärmetauscher zu.

Aus der GB 572,807 A ist ein gattungsgemäßer Ölkühler mit einer Ventileinrichtung mit einem Zylinder bekannt, in welchem ein kolbenartiger Schieber translatorisch bewegbar gelagert ist und wobei eine Führungshülse vorgesehen ist, welche eine Innenwand des Zylinders auskleidet und in welcher der kolbenartige Schieber verstellbar ist. Die Führungshülse weist dabei einen Axialschlitz auf, der mit einer zylinderseitigen Nase in der Art einer Verdrehsicherung zusammenwirkt,

Aus der EP 0 295 466 A2 ist eine Ventileinrichtung mit einem Zylinder bekannt, in welchem ein kolbenartiger Schieber translatorisch bewegbar gelagert ist. Zusätzlich ist eine Führungshülse vorgesehen, welche eine Innenwand des Zylinders auskleidet und in welcher der kolbenartige Schieber verstellbar ist.

Aus der JP 49 005726 U ist wiederum eine Ventileinrichtung mit einem Zylinder bekannt, in welchem ein kolbenartiger Schieber translatorisch bewegbar gelagert ist. Zusätzlich ist eine Führungshülse vorgesehen, die eine Innenwand des Zylinders auskleidet und in welcher der kolbenartige Schieber verstellbar ist.

Aus der DE 103 40 932 A1 und der US 4,522,231 A sind weitere Ventileinrichtungen bekannt.

Nachteilig bei der aus dem Stand der Technik bekannten Ölkühler mit einer Ventileinrichtung ist es, dass diese je nach Belastungsart bzw. Alter unter Umständen dadurch ausfallen kann, dass der kolbenartige Schieber der Ventileinrichtung im Zylinder frisst und dadurch die Ventileinrichtung nicht mehr schaltbar ist.

Die vorliegende Erfindung beschäftigt sich mit dem Problem, für einen gattungsgemäßen Ölkühler eine verbesserte Ausführungsform anzugeben, welche sich insbesondere durch eine erhöhte Funktionssicherheit sowie eine hohe Wartungs- und Reparaturfreundlichkeit auszeichnet.

Dieses Problem wird erfindungsgemäß durch den Gegenstande des unabhängigen Anspruchs gelöst. Vorteilhafte Ausführungsformen sind Gegenstand der abhängigen Ansprüche.

Die Erfindung beruht auf dem allgemeinen Gedanken, bei einem Ölkühler mit einer Ventileinrichtung mit einem Zylinder und einem darin translatorisch in der Art eines Kolben hin und her bewegbaren Schiebers eine den Zylinder von innen auskleidende Führungshülse vorzusehen, welche sozusagen eine Zwischenschicht zwischen dem Schieber und einer eigentlichen Zylindenrvand bildet. Eine derartige Führungshülse lässt sich äußerst kostengünstig als aufgerolltes Flachmetall herstellen und ebenso einfach in den Zylinder montieren. Bei Bedarf, das heißt insbesondere nach einer vordefinierten langen Betriebsdauer, kann die Führungshülse einfach und schnell ausgetauscht werden und dadurch eine für den Schieber leichtgängige Zylinderlaufbahn erhalten werden, die das Risiko eines Fressens des Schiebers im Zylinder deutlich senkt und dadurch die Funktionssicherheit der Ventileinrichtung deutlich steigert.

Die Führungshülse weist zudem einen Axialschlitz auf, der mit einer zylinderseitigen Nase in der Art einer Verdrehsicherung und Positionierhilfe zusammenwirkt. Die Führungshülse ist aus aufgerolltem Flachmetall, insbesondere aus aufgerolltem Blech, ausgebildet und mit einem Radius ausgestaltet, der geringfügig größer ist als der Radius des Zylinders, so dass die Führungshülse zum Einbau in den Zylinder zumindest leicht zusammengedrückt werden muss und nach dem Einbau in den Zylinder aufgrund einer federnden Spannung fest im Zylinder anliegt. Der Axialschlitz dient darüber hinaus durch ein Zusammenwirken mit der zylinderseitigen Nase in der Art einer Verdrehsicherung und Positionierhilfe, so dass die erfindungsgemäße Führungshülse üblicherweise in lediglich einer einzigen Einbauposition im Zylinder angeordnet werden kann.

Bei einer vorteilhaften Weiterbildung der erfindungsgemäßen Lösung, weist die Führungshülse Radialöffnungen auf, welche bei in den Zylinder eingebauter Führungshülse mit zylinderseitigen Kanalöffnungen zumindest bereichsweise fluchten. Dies bietet den großen Vorteil, dass sich ein Gehäuse der Ventileinrichtung äußerst kostengünstig und ohne hohen Nachbearbeitungsaufwand herstellen lässt, da die in der Zylinderwand ursprünglich vorgesehenen Radialöffnungen nunmehr an der Hülse ausgebildet werden können. Benutzt man die üblichen Spritzgießverfahren zur Herstellung so musste bisher in das Gehäuse an der Stelle der Ventileinrichtung die Öffnung mit angeformt, eingespritzt bzw. eingegossen werden, wobei dadurch, weil das Werkzeug aus dem Gehäuse wieder heraus genommen werden muss, eine große Öffnung entsteht. Möchte man jedoch kleinere Radialöffnungen für die Fluide, so kann man entweder eine Wand beim Herstellen stehen lassen und nach Entfernen des Werkzeuges in einem aufwändigen Nachbearbeitungsschritt im Gehäuse die erforderlichen Radialöffnungen einfräsen oder die erfindungsgemäße Vorrichtung verwenden . Man stellt wie bisher das Gehäuse her und erzeugt mittels der eingesteckten Führungshülse mindestens eine Radialöffnung. Das Herstellen der Radialöffnung in der Führungshülse ist denkbar einfach, da diese, beispielsweise in noch nicht aufgerolltem Zustand, einfach mittels eines geeigneten Stanzwerkzeuges kostengünstig ausgestanzt werden kann und nach einem Aufrollen des Flachmetalls zur Führungshülse automatisch an der richtigen Stelle positioniert ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und wird in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine erfindungsgemäße Ventileinrichtung in der Art eines Thermostatventils in einem Ölkühler im Zustand "Öl-kalt",
- Fig. 2: eine Darstellung wie in Fig. 1, jedoch aus einer anderen Perspektive und in einem Zustand "Öl-warm".

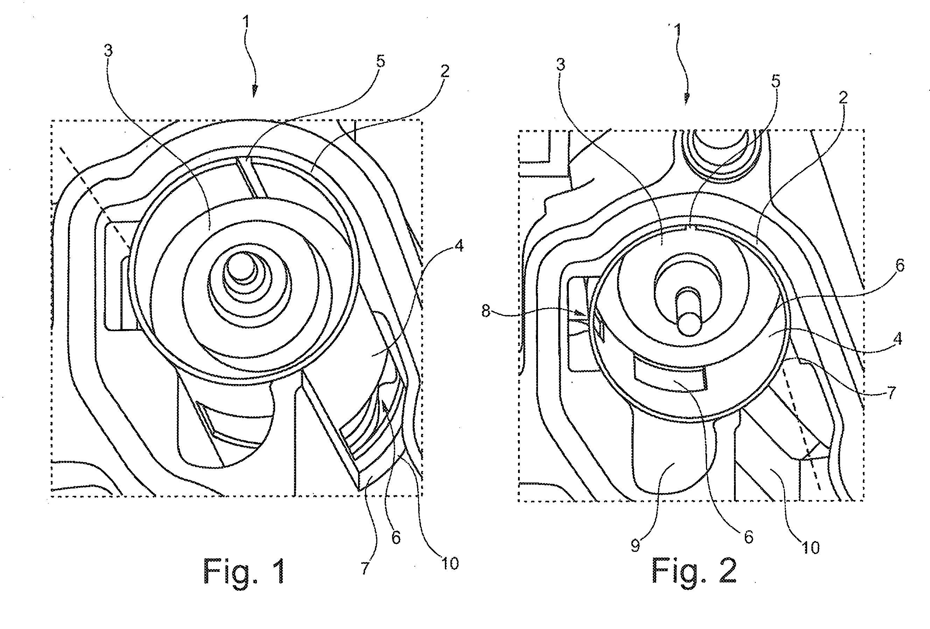

Entsprechend den Fig. 1 und 2, weist eine erfindungsgemäße Ventileinrichtung 1 einen Zylinder 2 auf, in welchem ein kolbenartiger Schieber 3 translatorisch hin und her bewegbar gelagert ist. Zwischen dem Zylinder 2 und dem kolbenartigen Schieber 3 ist dabei erfindungsgemäß eine Führungshülse 4 vorgesehen, welche eine Innenwand des Zylinders 2 auskleidet und in welcher der kolbenartige Schieber 3 geführt ist. Mit der erfindungsgemäßen Führungshülse 4 ist somit eine, insbesondere reibungsreduzierende, Zwischenschicht zwischen dem Zylinder 2 einerseits und dem kolbenartiger Schieber 3 andererseits gegeben, wobei die Führungshülse 4 aus kostengünstigem aufgerolltem Flachmetall, insbesondere aus Blech, ausgebildet ist.

Betrachtet man die Fig. 1 und 2 näher, so fällt auf, dass die jeweils dargestellten Führungshülsen 4 jeweils einen Axialschlitz 5 aufweisen, welcher mit einer nicht dargestellten zylinderseitigen Nase in der Art einer Verdrehsicherung zusammenwirken kann. Durch den Axialschlitz 5 wird nochmals deutlich, dass die Führungshülse 4 in konstruktiv einfacher Weise durch ein Aufrollen eines an sich flachen Metallstreifens hergestellt wird.

Neben der Aufgabe einer Verdrehsicherung, kann von dem Axialschlitz 5 noch eine weitere Aufgabe übernommen werden, nämlich die eines zumindest sich geringfügig in Umfangsrichtung erstreckenden Spaltes, welcher es ermöglicht, dass die Führungshülse 4 zum Einführen in den Zylinder 2 zumindest leicht zusammengedrückt und dadurch bezüglich ihres Radius' verkleinert wird, wobei sie sich nach dem vollständigen Einführen in den Zylinder 2 durch ein Loslassen federnd gegen eine Innenwand des Zylinders 2 vorspannt und sich dadurch selbstklemmend im Zylinder 2 fixiert.

Durch die translatorische Bewegung des kolbenartigen Schiebers 3 können mit der Ventileinrichtung 1 unterschiedliche Schaltzustände realisiert werden, wobei hierzu die Führungshülse 4 Radialöffnungen 6 aufweist, welche bei in den Zylinder 2 eingebauter Führungshülse 4 und entsprechender Schieberstellung, mit zylinderseitigen Kanalöffnungen 7 in Deckung gebracht werden können. Beispielsweise wird gemäß der Darstellung in der Fig. 1 durch die Radialöffnung 6 ein Zugang zu einem Bypasskanal 10 geschaffen, wodurch ein Ölstrom nicht durch eine Kühleinrichtung strömt, sondern an dieser vorbei gelenkt wird. Dies ist insbesondere für den Zustand "Öl-kalt" wichtig, bei welchem das Öl zunächst auf die erforderliche Betriebstemperatur gebracht und deshalb nicht durch die Kühlereinrichtung fließen soll.

Betrachtet man die Fig. 2, so erkennt man hier, dass der Bypasskanal 10 durch den Schieber 3 der Ventileinrichtung 1 verschlossen ist bzw. dass die zugehörige Radialöffnung 6 von dem Schieber 3 der Ventileinrichtung 1 verdeckt wird und dadurch nicht mit der zugehörigen Kanalöffnung 7 fluchtet. Weist das Öl bereits seine Betriebstemperatur auf und ist einer zunehmenden weiteren Erwärmung ausgesetzt, so muss dieses durch ein Zuführen zur Kühleinrichtung auf der erforderlichen Betriebstemperatur gehalten werden, so dass bei dem in Fig. 2 gezeigten Zustand "Öl-warm" ein Kühlerrücklauf 8 sowie ein Rücklauf 9 für gekühltes Öl zum Zylinderkopf geöffnet ist.

Die erfindungsgemäße Ventileinrichtung 1 kann beispielsweise als sogenanntes Thermostatventil bei einem Ölkühler eingesetzt werden. Darüber hinaus ist die Führungshülse 4 vorzugsweise aus einem die Reibung reduzierenden Material ausgebildet, so dass ein Fressen des Schiebers 3 in der Führungshülse 4 zuverlässig vermieden werden kann. Hierdurch kann insbesondere die Langlebigkeit und die Funktionssicherheit der erfindungsgemäßen Ventileinrichtung 1 gesteigert werden.

## Patentansprüche

1. Ölkühler mit einer Ventileinrichtung (1) mit einem Zylinder (2), in welchem ein kolbenartiger Schieber (3) translatorisch bewegbar gelagert ist, wobei eine Führungshülse (4) vorgesehen ist, welche eine Innenwand des Zylinders (2) auskleidet und in welcher der kolbenartige Schieber (3) verstellbar ist, wobei die Führungshülse (4) einen Axialschlitz (5) aufweist, der mit einer zylinderseitigen Nase in der Art einer Verdrehsicherung zusammenwirkt,
**dadurch gekennzeichnet,**
**dass** die Führungshülse (4) aus aufgerolltem Flachmetall, insbesondere aus Blech, ausgebildet ist.

2. Ölkühler nach Anspruch 1,
**dadurch gekennzeichnet,**
**dass** die Führungshülse (4) zumindest eine Radialöffnung (6) aufweist, welche bei in den Zylinder (2) eingebauter Führungshülse (4) und entsprechender Stellung des Schiebers (3) mit wenigstens einer zylinderseitigen Kanalöffnung (7) zumindest teilweise fluchtet.

3. Ölkühler nach einem der Ansprüche 1 oder 2,
**dadurch gekennzeichnet,**
**dass** die Ventileinrichtung (1) als Thermostatventil ausgebildet ist.

4. Ölkühler nach einem der Ansprüche 1 bis 3,
**dadurch gekennzeichnet,**
**dass** die Führungshülse (4) aus einem den Reibwiderstand reduzierenden Material hergestellt ist.

5. Ölkühler nach einem der Ansprüche 1 bis 4,
**dadurch gekennzeichnet,**
**dass** die Führungshülse (4) in dem Zylinder (2) federnd vorgespannt angeordnet ist.

## Claims

1. An oil cooler comprising a valve device (1) with a cylinder (2) in which a piston-like slider (3) is mounted in a translationally movable manner, wherein a guide sleeve (4) is provided for lining an inner wall of the cylinder (2), and in which guide sleeve the piston-like slider (3) can be displaced, wherein the guide sleeve (4) has an axial slot (5) that interacts with a cylinder-side lug in the manner of an anti-rotation device, **characterized in that** the guide sleeve (4) is formed from rolled flats, in particular from sheet metal.

2. The oil cooler according to claim 1, **characterized in that** the guide sleeve (4) has at least one radial opening (6) which, with the guide sleeve (4) installed in the cylinder (2) and the slider (3) in the appropriate position, is at least partially aligned with at least one cylinder-side channel opening (7).

3. The oil cooler according to claim 1 or claim 2, **characterized in that** the valve device (1) is provided as a thermostat valve.

4. The oil cooler according to any one of the claims 1 to 3, **characterized in that** the guide sleeve (4) is made from a material that reduces frictional resistance.

5. The oil cooler according to any one of the claims 1 to 4, **characterized in that** the guide sleeve (4) is arranged in the cylinder (2) in an elastically preloaded manner.

## Revendications

1. Refroidisseur d'huile comportant un dispositif de soupape (1) avec un cylindre (2), dans lequel un coulisseau de type piston (3) est positionné de manière déplaçable par translation, dans lequel un manchon de guidage (4) est prévu, qui revêt une paroi intérieure du cylindre (2) et dans lequel le coulissant de type piston (3) est ajustable, dans lequel le manchon de guidage (4) présente une fente axiale (5), qui coopère avec un nez du côté du cylindre à la manière d'une sécurité contre une torsion, **caractérisé en ce que** le manchon de guidage (4) est conçu dans un métal plat enroulé, notamment une tôle.

2. Refroidisseur d'huile selon la revendication 1, **caractérisé en ce que** le manchon de guidage (4) présente au moins une ouverture radiale (6), qui, quand le manchon de guidage (4) est monté dans le cylindre (2) et en présence de la position correspondante du coulisseau (3), s'aligne au moins partiellement avec au moins une ouverture de canal (7) du côté du cylindre.

3. Refroidisseur d'huile selon une des revendications 1 ou 2, **caractérisé en ce que** le dispositif de soupape (1) est conçu comme une soupape de thermostat.

4. Refroidisseur d'huile selon une des revendications 1 à 3, **caractérisé en ce que** le manchon de guidage (4) est fabriqué dans un matériau réduisant la résistance à la friction.

5. Refroidisseur d'huile selon une des revendications 1 à 4, **caractérisé en ce que** le manchon de guidage (4) est disposé dans le cylindre (2) de manière précontrainte par ressort.
